# EUROPEAN PATENT SPECIFICATION

(11) **EP 3 867 897 B1**
(45) Date of publication and mention of the grant of the patent: **16.07.2025**
(21) Application number: 19801103.3
(22) Date of filing: 17.10.2019
(51) Int. Cl.: G09B 19/00, G05B 19/04

(54) **AN APPARATUS FOR MONITORING THE ASSEMBLY AND PROGRAMMING ACTIVITIES OF A ROBOTIZED SYSTEM**
VORRICHTUNG ZUR ÜBERWACHUNG DER MONTAGE- UND PROGRAMMIERAKTIVITÄTEN EINES ROBOTISIERTEN SYSTEMS
APPAREIL DE SURVEILLANCE DES ACTIVITÉS D'ASSEMBLAGE ET DE PROGRAMMATION D'UN SYSTÈME ROBOTISÉ

(30) Priority: 19.10.2018 IT 201800009636
(43) Date of publication of application: 25.08.2021
(73) Proprietor: Università Politecnica Delle Marche, 60121 Ancona (IT)
(72) Inventor: SCARADOZZI, David, 60030 Ancona (IT); DIAMANTINI, Claudia, 60019 Senigallia (IT); SCREPANTI, Laura, 63848 Petritoli - Fermo (IT); CESARETTI, Lorenzo, 60022 Castelfidardo (IT); MAZZIERI, Elisa, 60027 Osimo - Ancona (IT); ZINGARETTI, Silvia, 60033 Chiaravalle - Ancona (IT); COSTA, Daniele, 60015 Falconara Marittima - Ancona (IT)
(74) Representative: Casadei, Barbara
(86) International application number: PCT/IB2019/058872
(87) International publication number: WO 2020/079644

(56) References cited:
- US-A1- 2014 170 633
- US-A1- 2016 379 519
- US-A1- 2017 053 550

## Description

### Technical field

The present invention relates to an apparatus and a method for monitoring the operations for assembling and programming a robotized system, which makes it possible to clarify the effectiveness of the actual process aimed at the above-mentioned operations for assembling and programming the robotized system.

### Background art

Currently, in the context of educational robotics, it is difficult to assess the learning process of the students with regard to the operations for assembling and programming robots.

Known systems and methods for programming robots are described and illustrated in documents US2017/053550A1 and US2016/379519A1.

In a traditional educational robotics lesson, the student is required to perform activities which involve hardware connections and software programming.

The execution mode first comprises explanation by the teacher of the classic programming blocks (for example iteration, cycle, conditional, start, end, sequential).

The teacher delivers the construction plans to the student who assembles the robot using the knowledge acquired.

The student then develops the algorithms for animating the robot.

Lastly, the teacher verifies, together with the student, the operation of the robot, and together they assess possible logic and construction errors.

The result obtained is then used by the teacher in assessing the problem-solving ability and understanding of the student.

In fact, the teacher can evaluate the student's learning during moments of dedicated oral dialogue regarding each single programming exercise, considering logic and construction errors, and/or by the nature of the student's responses, as well as questionnaires relating to the taught course, usually in the form of start and end course questionnaires.

In this context, the teacher's activity in assessing the student's learning not only requires a considerable effort in terms of time, but may prove to be lacking in information significant for that assessment, such as the information relative to the attempts to assemble and program the robotized system that were made during the exercise.

In short, in the traditional method of assessing learning, this evaluation requires a high level of engagement, especially in terms of time, by the teachers and/or by specialised personnel. Many of the resources are used to manually process the data gathered during the lessons. In the literature, and in the commercial cases, the assessment is made in various ways questionnaires which adapt to the answers given by the student, and the final assessment is given by the combination of the errors made during the assembly and programming activities and by the weight of each error, simulating certain criteria.

### Disclosure of the invention

The method according to the present description and/or according to any one of the appended claims of the method, enables automatic storage of information relative to the assembly and programming of the robotized system actuated by a student during an exercise in educational robotics.

An apparatus according to the present description and/or according to any one of the appended claims of the apparatus, enables automatic storage of information relative to the assembly and programming of the robotized system actuated by a student during an exercise in educational robotics.

An apparatus according to the present description is configured to enable a method according to the present description to be carried out.

The characteristics of an apparatus and a method according to the present description will emerge more clearly from the following detailed description of respective example embodiments of the apparatus and method.

### Brief description of the drawings

The detailed description which follows relates to the accompanying drawings, in which:
- figure 1 is a schematic block and functional diagram of a first possible embodiment of a possible example of an apparatus according to the present description;
- figure 2 is a schematic view of some possible programming blocks which can be selected by a user using the apparatus of figure 1;
- figure 3 is a flow chart representing the execution of a possible software program by way of example which can be created by a user using the apparatus of figure 1;
- figure 4 is a schematic illustration of the algorithm structure of any block of figure 2, relative to the communication between the block and a memory of the apparatus.

### Detailed description of preferred embodiments of the invention

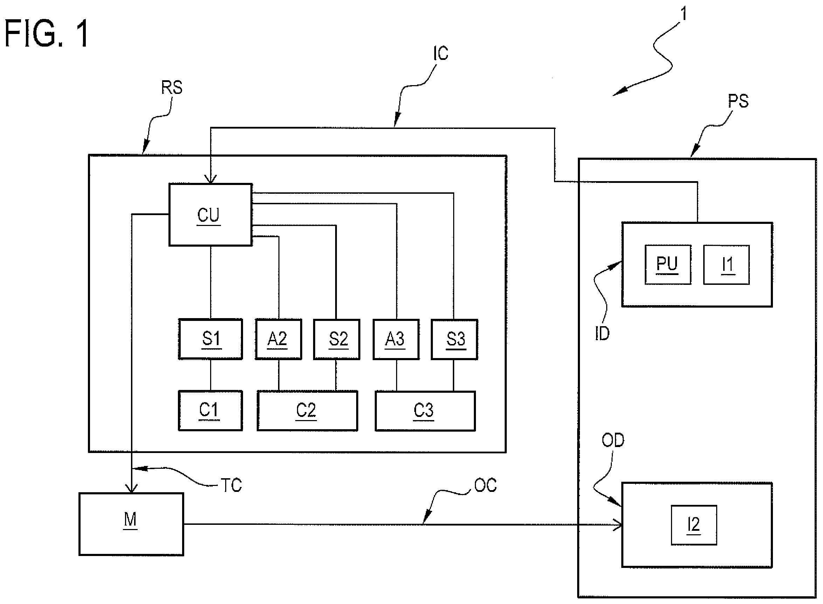

In figure 1 reference numeral 1 denotes an apparatus according to the present description. The term "apparatus" used below means the possible embodiment of the apparatus.

The apparatus 1 is configured to perform a possible embodiment of a method according to the present description. The term "method" used below relates to the possible embodiment of the method.

The method can be executed and/or can take place by means of the apparatus.

The apparatus is configured for monitoring the assembly and programming activities of a robotized system. The apparatus is configured to perform the monitoring in particular for the purposes of assessing learning in the context of educational robotics. The method is also a method for monitoring these assembly and programming activities of the robotized system, in particular for the purposes of assessing learning in the context of educational robotics.

The robotized system is denoted by RS in figure 1.

For the following explanations, it is useful here to consider a possible first user of the apparatus 1 and a possible second user of the apparatus 1. The first user is a student or learner. The second user is a teacher, who is carrying out an educational robotics lesson and who desires to perform a learning assessment of the first user during the lesson. The apparatus and/or the method are designed to ensure that the assessment is simpler and more convenient for the teacher.

The robotized system RS comprises a control unit CU. The robotized system comprises one or more structural components C1, C2 and C3. In more general terms, the number of structural components may be any number. The term structural component means any tangible element which can be subjected to a movement relative to any other tangible element of the robotized system. The term "tangible element" can be taken to mean a concrete element which can have any purpose, for example that of producing a motion of another tangible element of the robotized system RS and/or of exerting any force on another tangible element of the robotized system RS or towards an element or the environment outside the robotized system RS.

By way of example, the term "tangible element" can be taken to mean a gripping element, a mechanical hand, a mechanical foot, a mechanical arm, a pusher, an actuating element, etc.

The robotized system RS comprises one or more control elements S1, A2, S2, A3, S3. These control elements are configured to be used in the context of the robotized system RS for controlling the robotized system and therefore for controlling one or more of the above-mentioned structural components.

In more general terms, the number of these control elements may be any number.

Each of the control elements may be, for example, a sensor or an actuator. Each of the control elements is associated with a respective structural component. Control element S1 is a sensor associated with the first component C1. Control element S2 is a sensor associated with the second component C2. Control element A2 is an actuator associated with the second component C2. Control element S3 is a sensor associated with the third component C3. Control element A3 is an actuator associated with the third component C3.

The term actuator associated with a component is taken to mean any actuator operating on the component to cause a movement correlated with the actuator. The movement correlated with the actuator is taken to mean a movement of the component to which the actuator is associated with respect to at least one other component of the robotized system RS. The sensor associated with a component is taken to mean any sensor positioned relative to the component in such a way as to detect the value of a determined physical quantity of the sensor. The term physical quantity of the sensor means a physical quantity which the sensor operatively detects. The quantity of the sensor could be correlated and/or be a function of a movement of the component to which the sensor is associated relative to at least one other component of the robotized system RS, or another type of physical quantity.

A sensor might be associated with a component in such a way that the physical quantity of the sensor, as defined above, is variable as a function of the movement correlated with an actuator in turn associated with the same component. In that case, the sensor could be a rotary movement or translational movement sensor, and the actuator associated with the same component could be designed to cause the rotational or translational movement thereof. The sensor associated with a component may also be referred to simply as a sensor positioned on the component. In that case, the sensor could be, for example, a temperature or light sensor. In the latter case, the sensor can be considered to be associated with the component as it measures the temperature or the light in an environment close to the component.

For example, the sensor S1 associated with the first component C1 could be a light sensor positioned on the first component C1.

For example, the actuator A2 associated with the second component C2 could be a motor which operatively causes a movement of the second component C2 relative to the first component C1. For example, the sensor S2 associated with the second component C2 could be a sensor which operatively detects the value of a physical quantity the variation of which is a function of the movement of the second component C2.

For example, the actuator A3 associated with the third component C3 could be a motor which operatively causes a movement of the third component C3 relative to the second component C2. For example, the sensor S3 associated with the third component C3 could be a sensor which operatively detects the value of a physical quantity the variation of which is a function of the movement of the third component C3.

The apparatus 1 comprises a first user interface 11. The first interface I1 is configured to allow the first user to create a software program P by means of at least one selection of programming blocks.

The first interface I1 may comprise, for example, a screen.

The first interface I1 could be configured, for example, to allow the selection by at least displaying on the screen of visual elements or image elements. Each of these visual elements corresponds to a respective programming block which can be selected by the first user. In that case, the blocks are displayed on the screen as "visual blocks".

The apparatus could, for example, comprise an electronic input device ID. The electronic input device ID comprises the first interface I1 and a programming unit PU. The programming unit UP is configured for creating the program on the basis at least of the selection made by the first user, and/or of other programming selections made by the first user using the first interface 11.

The input device ID could be, for example, a mobile device or, for example, a PC or, for example, a tablet.

The apparatus could comprise, for example, an input connection IC. The input connection IC is operatively interposed between the input device ID and the control unit CU. The input connection IC allows the first user to load the created program in the control unit CU, in such a way that the created program can be run or circulated in the control unit CU.

The input connection IC could be, for example, wired or wireless.

During the lesson, the second user imparts, to the first user, teachings and/or explanations which at least relate to how to program the control unit CU using the interface I1, and/or how to assemble or mount the structural components in the robotized system RS, and/or how to assemble or mount the control elements in the robotized system RS, to obtain a predetermined procedure for operation of the robotized system RS. By predetermined operating procedure is meant a procedure comprising a series of events which involve the robotized system RS and/or the structural components of the robotized system RS. The predetermined operating procedure may generally vary according to, for example, the wishes of the second user.

During an exercise which takes place after the lesson, the first user operates with the aim of performing the predetermined operating procedure automatically. For this reason, the first user must attempt to create a program which, when run in the control unit CU, causes the occurrence of the predetermined operating procedure. Moreover, the assembly and/or mounting of the structural components and/or the control elements must also be correct so that the predetermined operating procedure occurs.

Each of the above-mentioned programming blocks, by which the first user can create the program by means of the first interface I1, is associated with a respective function and a respective one of the control elements. The respective function may be any one from among a respective group of functions.

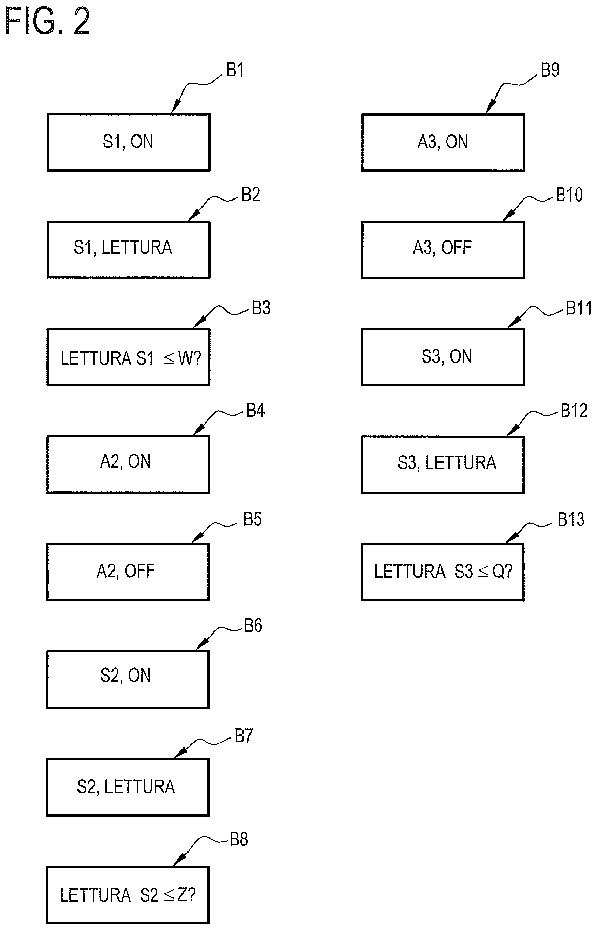

Figure 2 shows, by way of example, programming blocks B1, B2, B3, B4, B5, B6, B7, B8, B9, B10, B11, B12, and B13. Figure 2 shows the association of each block with the respective function and the respective control element.

Each programming block comprises a respective main algorithm and a respective tracking algorithm, in such a way that the execution of the programming block corresponds to the execution of both the respective main algorithm and the respective tracking algorithm.

For each programming block B, as mentioned above, the first interface I1 could be configured to allow the first user to select the programming block B by displaying a respective visual block which represents on the screen the programming block B. In that case, each respective visual block displayed on the screen is therefore associated with the respective main algorithm and tracking algorithm of the respective programming block B shown. Each of the visual blocks could also be referred to as "visual programming block"; the latter expression can be taken to mean both the visual element and the actual programming block represented by the visual element.

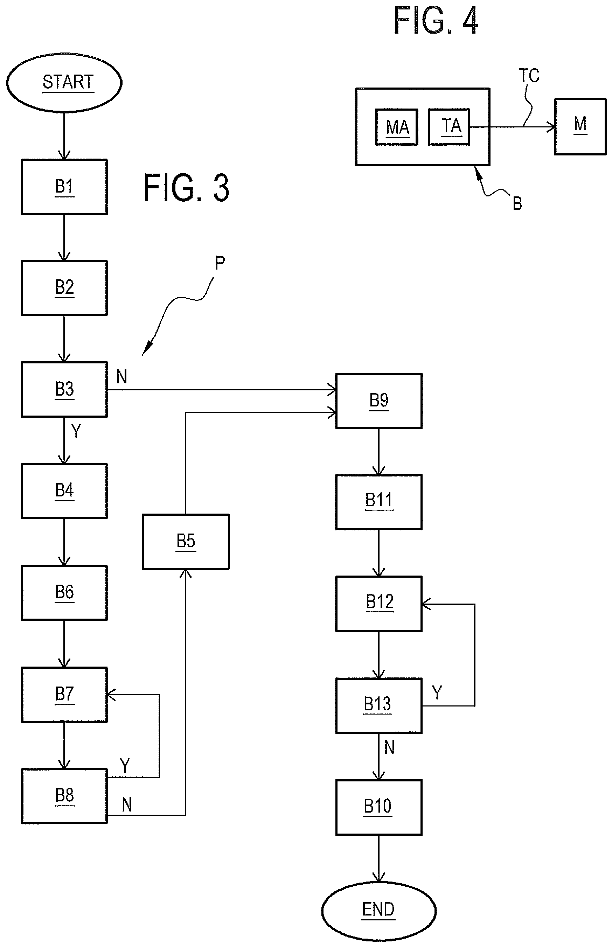

Figure 4 shows a programming block B, which can be any of the blocks of figure 2. Figure 4 shows that the block B comprises the respective main algorithm, denoted by MA, and the respective tracking algorithm, denoted by TA.

For each programming block (B), the execution of the respective main algorithm (MA) in the control unit (CU) is such that the control unit (CU) carries out the function associated with the block (B) relative to the control element associated with the block (B). This means that the function is carried out on the control element associated to the block and/or by means of the interaction with the control element.

Returning to figure 2, the block B1 is associated with the sensor S1 and the ON function. This means that the execution of the main algorithm of the block B1, in the control unit CU, is such that the control unit CU switches on and/or activates the sensor S1.

The block B2 is associated with the sensor S1 and the "LETTURA" function. This means that the execution of the main algorithm of the block B2, in the control unit CU, is such that the control unit CU reads the sensor S1.

The reading of a sensor is taken to mean obtaining the current value of the physical quantity of the sensor.

The block B3 is associated with the sensor S1 and the "LETTURAS1≤W?" function. This means that the execution of the main algorithm of the block B3, in the control unit CU, is such that the control unit CU determines and/or checks if the current value of the physical quantity of the sensor S1 is less than or equal to a predetermined value W.

The term "predetermined value" is taken to mean a predetermined value at the time of execution of the program. For this reason, a predetermined value could be, for example, a value set by any user.

The block B4 is associated with the actuator A2 and the "ON" function. This means that the execution of the main algorithm of the block B4, in the control unit CU, is such that the control unit CU switches on and/or activates and/or actuates the actuator A2.

The block B5 is associated with the actuator A2 and with the "OFF" function. This means that the execution of the main algorithm of the block B5, in the control unit CU, is such that the control unit CU disengages and/or deactivates the actuator A2.

The block B6 is associated with the sensor S2 and the ON function. This means that the execution of the main algorithm of the block B6, in the control unit CU, is such that the control unit CU switches on and/or activates the sensor S2.

The block B7 is associated with the sensor S2 and the "LETTURA" function. This means that the execution of the main algorithm of the block B7, in the control unit CU, is such that the control unit CU takes a reading of the sensor S2.

The block B8 is associated with the sensor S2 and with the "LETTURAS2≤Z?" function. This means that the execution of the main algorithm of the block B8, in the control unit CU, is such that the control unit CU determines and/or checks if the current value of the physical quantity of the sensor S2 is less than or equal to a predetermined value Z. The block B9 is associated with the actuator A3 and the "ON" function. This means that the execution of the main algorithm of the block B9, in the control unit CU, is such that the control unit CU switches on and/or activates and/or actuates the actuator A3.

The block B10 is associated with the actuator A3 and with the "OFF" function. This means that the execution of the main algorithm of the block B10, in the control unit CU, is such that the control unit CU switches off and/or deactivates the actuator A3.

The block B11 is associated with the sensor S3 and the ON function. This means that the execution of the main algorithm of the block B11, in the control unit CU, is such that the control unit CU switches on and/or activates the sensor S3.

The block B12 is associated with the sensor S3 and the "LETTURA" function. This means that the execution of the main algorithm of the block B12, in the control unit CU, is such that the control unit CU takes a reading of the sensor S3.

The block B13 is associated with the sensor S3 and the "LETTURAS3≤Q?" function. This means that the execution of the main algorithm of the block B13, in the control unit CU, is such that the control unit CU determines and/or checks if the current value of the physical quantity associated with the sensor S3 is less than or equal to a predetermined value Q.

Figure 3 is a flow chart relative to the execution of an example software program which could be created by the blocks of figure 2.

Note that in figure 3, the letter "Y" is used to mean "yes" and "N" is used to mean "no".

For this reason, the program P is such that the sensor S1 (B1) is switched on, and the sensor S1 (B2) read. If the reading of the sensor S1 indicates that the current value of the physical quantity of the sensor S1 is greater than the value W (N), the program P activates the actuator A3 (B9). Otherwise (Y), the program ensures that the actuator A2 (B4) is operated, the sensor S2 (B6) is switched on, the sensor S2 (B7) is read, and whether the current value of the physical quantity of the sensor S2 is less than or equal to the value Z (B8). If the current value of the physical quantity of the sensor S2 is less than or equal to the value Z (Y), the program repeats the reading of the sensor S2 (B7). Otherwise (N), the program P causes the actuator A2 (B5) to be deactivated and the actuator A3 (B9) actuated.

The actuation of the actuator A3 (B9) means that the sensor S3 (B11) is switched on, that the sensor S3 (B12) is read, and that a check is made of the current value of the physical quantity of the sensor S3 to verify that it is less than or equal to the value Q (B13). If the current value of the physical quantity of the sensor S3 is less than or equal to the value Q (Y), the program P repeats the reading of the sensor S3 (B12), or (N) deactivates the actuator A3.

Note that the program P is provided by way of example, as well as all the features of this description, none of which is designed to limit the scope of protection of this patent application, which is defined by the appended claims.

For each programming block B, the execution of the respective tracking algorithm TA in the control unit CU is such that the memory (M) automatically stores at least one data item indicating the execution of the respective main algorithm MA and/or indicative of the time of execution of the respective main algorithm MA.

For each programming block B, the execution of the respective tracking algorithm TA in the control unit CU is such that the memory M automatically stores at least one data item indicating the correctness or incorrectness of the respective main algorithm MA.

The term "indicative" could be understood to mean "representative".

The apparatus 1 comprises a memory M.

The apparatus 1 comprises a tracking connection TC. The tracking connection TC is operatively interposed between the control unit CU and the memory M. The tracking connection TC is configured for transferring data and/or signals from the control unit CU to the memory M.

The tracking connection TC may be, for example, wired or wireless.

In figure 4 the tracking connection TC is interposed between the sub-block relative to the tracking algorithm TA and the block relative to the memory M, since it is through the tracking connection TC that the transfer to the memory M of the at least one data item indicating the execution of the main algorithm MA takes place, and/or the correctness (or incorrectness) and/or the time of execution of the main algorithm MA.

The apparatus 1 comprises a second user interface I2. The second interface I2 is configured to provide, as output to the second user, information representing the stored data in the memory M. The second interface I2 could comprise, for example, a screen.

The apparatus comprises an electronic output device OD. The electronic output device (OD) in turn comprises the second interface (I2).

The OD output device could be, for example, a mobile device or, for example, a PC or, for example, a tablet.

The apparatus 1 comprises an output connection OC. The output connection OC is operatively interposed between the memory M and the output device OD. The output connection OC is configured to transfer the data from the memory (M) to the output device (OD), in such a way that the second interface (I2) can provide the information to the second user.

The output connection OC may be, for example, wired or wireless.

By means of the second interface I2, the second user can check and/or control how the first user has operated in the programming of the control unit, and/or in the mounting or assembly of the structural components of the robotized system and/or in the mounting or assembly of the control elements, for the purpose of carrying out an assessment process of the first user's learning during the lesson.

The apparatus 1 might comprise a programming system PS which in turn comprises the electronic input device ID and electronic output device OD.

The programming system PS could be, for example, a single PC or Tablet or mobile device, which comprises both the input device ID and the output device OD.

The first interface I1 and the second interface I2 might coincide.

The screen of the first interface I1 could coincide with the screen of the second interface I2.

The input device ID and output device OD could coincide.

The input connection IC and the output connection OC could coincide. The input connection IC and the tracking connection TC could coincide. The output connection OC and the tracking connection TC could coincide.

The memory M could, for example, be on a cloud. The memory M could alternatively belong to the robotized system RS. The memory M could alternatively belong to the electronic output device OD. The memory M could alternatively belong to the electronic input device ID. The memory could be part of an Internet of Things system. The memory M could be on a local or remote server.

The apparatus 1 could comprise, for at least one of the control elements, an auxiliary sensor associated with the control element. The apparatus could be configured so that the auxiliary sensor detects the actuation and/or the activation of the control element to which it is associated. The apparatus could be configured so that the auxiliary sensor acts in such a way that the memory M stores at least one data item indicating the actuation and/or the activation.

The memorisation of the drives and/or activations of the one or more control elements also contributes to improving the assessment process which the second user wishes to carry out.

The method comprises a mounting or assembly step. During the mounting or assembly step, the first user mounts and/or assembles the robotized system RS. For this reason, during the mounting or assembly step the first user mounts and/or assembles the one or more structural components and/or the one or more control elements in the robotized system.

The method comprises a programming step. During the programming step, the first user creates the program P.

The method comprises an execution step. During the execution step, the created program P is run in a control unit CU.

The method comprises a step of supplying. During the step of supplying, the above-mentioned information is supplied to the second user.

The method can be performed by means of the apparatus 1.

For each programming block B, the execution of the block B corresponds to the execution of both the respective main algorithm MA and the respective tracking algorithm TA.

For each block B of the program P performed, the execution of the respective tracking algorithm TA in the control unit CU causes the automatic storage of at least one data item indicating the execution of the respective main algorithm MA. For each block B of the program P performed, the execution of the respective tracking algorithm TA in the control unit CU causes the automatic storage of at least one data item indicating the time of execution of the respective main algorithm MA.

For each block B of the program P performed, the execution of the respective tracking algorithm TA in the control unit CU causes the automatic storage of at least one data item indicating the correctness or incorrectness of the execution of the respective main algorithm MA.

Thanks to the automatic storage, for example in the memory M, of the data indicating the execution and/or the instants of execution of the programming blocks and/or their correctness of execution, the second user can, using the second interface I2, check the learning process of the first user in obtaining the above-mentioned operating procedure.

In fact, the second user can check the time any programming block has been executed and/or its correct execution.

The second user can therefore check how the first user has performed in the creation of the program. For example, the second user can check whether the first user, in the creation of this program, has proceeded more or less by trial and error.

For example, the second user can also check if, at a certain moment of time, a programming block has been executed associated with a control element which was not, at the moment of execution, correctly mounted in the robotized system RS. In such a case, there would be an incorrect execution of the block, and the memory would store a data item indicating the incorrect execution.

Advantageously, for each programming block, the tracking algorithm leaves trace, in the memory M, of the logic and implementing choice which the student (first user) actuated during the exercise.

This traceability has a high added value for the teacher (second user) who is informed of the student's attempts to assemble and program during the exercise.

Moreover, the second interface I2 might be configured to provide the above-mentioned information in real time.

The possibility of receiving an immediate feedback on the correct execution of the assembly and/or programming means that the students are immediately informed of the correct execution of the exercise relating to the assembly and programming, and that the teachers are immediately aware, even during the exercise itself, of the success of the exercise on the part of the student.

The traceability of the assembly and/or of the programming also makes it possible to monitor and correct the teaching by the teachers, if the information deriving from the assembly and the programming of more than one of the students denote a lack of understanding of the exercise.

The possibility of remotely accessing the data collection memory allows the teachers to verify the learning of the class, even at a time distance from the end of the exercise, and, if necessary, to implement measures aimed at correcting the exercise.

The memory M could be part of an expert system which is able to collate data in real time on the execution sequences performed by the student, which makes it possible to monitor her/his learning and, consequently, offer suggestions to modify the teaching process in real time.

The apparatus 1 could comprise an expert accounting system for analysing, in more detail, the entire learning process for analytic or assessment purposes.

A process for assessing a student's learning during an educational robotics lesson may comprise repeating an operating sequence at least twice.

The operating sequence comprises the lesson, during which the second user imparts to the first user teachings on how to perform the assembly step and the programming step.

The operating sequence comprises carrying out the method.

The operating sequence comprises an assessing step, during which the second user assesses and/or controls the information supplied, if necessary comparing it with information supplied during operating sequences carried out previously.

In this way, the apparatus, which can be used to perform the method, is used to monitor the evolution of the learning, by comparing the data collected in the repetition of the exercise.

The method and the apparatus may also be used for diagnosing cognitive deficits or disease in relation to cognitive deficits: the apparatus may, for example, be used in asking, for example, a patient, who would in that case be the first user, to construct the robotized system, and in displaying the stored data in relation to a standard reference.

The method and the apparatus may also be used in motor or cognitive rehabilitation situations: the apparatus may be, for example, used in the rehabilitation of the patient under treatment by asking her or him to construct the robotized system and to display the stored data in relation to a standard reference or a previous situation.

## Claims

1. An apparatus (1) for monitoring the assembly and programming activities of a robotized system (RS), comprising:
- a robotized system (RS) which comprises a control unit (CU), one or more structural components (C1, C2, C3), and one or more elements (S1, S2, A2, S2, A3, S3) for controlling the structural components; each of the control elements may be a sensor or an actuator associated with a respective structural component;
- a first user interface (11) configured to allow a first user to create a software program (P) by at least one selection of visual programming blocks (B1, B2, B3, B4, B5, B6, B7, B8, B9, B10, B11, B12, B13), each of these visual programming blocks being associated with a respective function and a respective one of the control elements, the respective function may be one amongst a respective group of functions;
- a memory (M);
- a second user interface (I2);
- a tracking connection (TC), operatively interposed between the control unit (CU) and the memory (M) to transfer the data from the control unit (CU) to the memory (M);
for each programming block (B), the block (B) comprises a respective main algorithm (MA);
the apparatus is configured so that, for each programming block (B), the execution of the respective main algorithm (MA) in the control unit (CU) is such that the control unit (CU) performs the function associated with the block (B) relative to the control element associated with the block (B);
**characterised in that**
for each programming block (B), the block (B) comprises a respective tracking algorithm (TA), in such a way that the execution of the block (B) corresponds to the execution of both the main algorithm (MA) and the tracking algorithm (TA);
the apparatus is configured so that, for each block (B), the execution of the respective tracking algorithm (TA) in the control unit (CU) is such that the memory (M) automatically stores at least one data item indicating the execution of the respective main algorithm (MA);
the apparatus (1) is configured so that, for each block (B), the execution of the respective tracking algorithm (TA) in the control unit (CU) is such that the memory (M) automatically stores at least one data item indicating the correctness of the execution of the respective main algorithm (MA);
the second user interface (I2) configured to provide as output to a second user information representing the data stored in the memory (M).

2. The monitoring apparatus (1) according to claim 1, wherein the apparatus is configured so that, for each block (B), the execution of the respective tracking algorithm (TA) in the control unit (CU) is such that the memory (M) automatically stores at least one data item indicating the time of execution of the respective main algorithm (MA).

3. The monitoring apparatus (1) according to claim 1, wherein, for each block (B), the respective group of functions comprises a function (ON) for actuation of the respective control element, in such a way that, for each block, the execution of the respective tracking algorithm (TA) is such that the memory (M) stores the actuation or the lack of actuation of the control element associated with the block (B).

4. The monitoring apparatus (1) according to any one of the preceding claims, comprising, for at least one of the control elements, an auxiliary sensor associated with the control element, the apparatus being configured so that the auxiliary sensor detects the actuation of the control element.

5. The monitoring apparatus (1) according to any one of the preceding claims, wherein the memory (M) belongs to the robotized system (RS).

6. The monitoring apparatus (1) according to any one of the preceding claims, comprising:
- an electronic input device (ID) which comprises the first interface (11) and a programming unit (PU), the programming unit being configured to create the program (P) on the basis at least of the selection;
- an inlet connection (IC) operatively interposed between the input device (ID), to allow the user to load the program in the control unit (CU), in such a way that the program can be executed in the control unit (CU).

7. The monitoring apparatus (1) according to any one of the preceding claims, comprising:
- an electronic output device (OD) which in turn comprises the second interface (I2);
- an outlet connection (OC) operatively interposed between the memory and the output device (OD), to transfer the data from the memory (M) to the output device (OD), in such a way that the second interface (I2) can provide the information.

8. The monitoring apparatus (1) according to claim 6 or 7, comprising a programming system (PS) which in turn comprises the electronic input device (ID) and electronic output device (OD).

9. A method (1) for monitoring the assembly and programming activities of a robotized system (RS), comprising:
- an assembly step, during which a first user mounts a robotized system (RS) which comprises a control unit (CU), one or more structural components (C1, C2, C3), and one or more elements (S1, S2, A2, S2, A3, S3) for controlling the structural components; each of the control elements may be a sensor or an actuator associated with a respective structural component;
- a programming step during which a first user creates, via a first user interface (11), a program (P) by at least one selection of visual programming blocks (B1, B2, B3, B4, B5, B6, B7, B8, B9, B10, B11, B12, B13), each of these visual programming blocks being associated with a respective function and a respective one of the control elements, the respective function may be one amongst a respective group of functions;
- an execution step during which the program created (P) is executed in a control unit (CU);
for each block (B), the block (B) comprises a respective main algorithm (MA) and a respective tracking algorithm (TA), in such a way that the execution of the block (B) corresponds to the execution of both the main algorithm (MA) and the tracking algorithm (TA);
for each block (B) of the program (P) performed, the execution of the respective main algorithm (MA) in the control unit (CU) is such that the control unit (CU) performs the function associated with the block (B) relative to the control element associated with the block (B);
**characterised in that**,
for each block (B), the block (B) comprises a respective tracking algorithm (TA), in such a way that the execution of the block (B) corresponds to the execution of both the main algorithm (MA) and the tracking algorithm (TA);
for each block (B) of the program (P) performed, the execution of the respective tracking algorithm (TA) in the control unit (CU) causes the automatic storage of at least one data item indicating the execution of the respective main algorithm (MA);
for each block (B) of the program (P) performed, the execution of the respective tracking algorithm (TA) in the control unit (CU) causes the automatic storage of at least one data item indicating the correctness or incorrectness of the execution of the respective main algorithm (MA);
the method comprises a step of supplying, via a second user interface, to a second user information related to the stored data.

10. The method according to claim 9, wherein, for each block (B) of the program (P) performed, the execution of the respective tracking algorithm (TA) in the control unit (CU) causes the automatic storage of at least one data item indicating the time of execution of the respective main algorithm (MA).

11. The monitoring method according claim 9 or 10, wherein the method is performed by an apparatus according to any one of claims 1 to 8.

12. A process for assessing the learning of a student during an educational lesson by means of a method according to any one of claims 9 to 11, comprising repeating at least twice an operating sequence which comprises:
- performing the lesson, during which the second user imparts to the first user teachings on how to perform the assembly step and the programming step;
- performing a method according to any one of claims 9 to 11;
- an assessing step, during which the second user assesses and/or controls the information supplied, if necessary comparing it with information supplied during operating sequences carried out previously.

## Patentansprüche

1. Vorrichtung (1) zur Überwachung der Montage- und Programmieraktivitäten eines robotisierten Systems (RS), umfassend:
- ein robotisiertes System (RS), das eine Steuereinheit (CU), eine oder mehrere Strukturkomponenten (C1, C2, C3) und ein oder mehrere Elemente (S1, S2, A2, S2, A3, S3) zum Steuern der Strukturkomponenten umfasst; ein jedes der Steuerelemente kann ein Sensor oder ein Aktor sein, der mit einer jeweiligen Strukturkomponente assoziiert ist;
- eine erste Benutzerschnittstelle (I1), die ausgelegt ist, um es einem ersten Benutzer zu ermöglichen, ein Softwareprogramm (P) durch mindestens eine Auswahl von visuellen Programmierblöcken (B1, B2, B3, B4, B5, B6, B7, B8, B9, B10, B11, B12, B13) zu erstellen, wobei ein jeder dieser visuellen Programmierblöcke mit einer jeweiligen Funktion und einem jeweiligen der Steuerelemente assoziiert ist, wobei die jeweilige Funktion eine aus einer jeweiligen Funktionsgruppe sein kann;
- einen Speicher (M);
- eine zweite Benutzerschnittstelle (12);
- eine Verfolgungsverbindung (TC), die betriebswirksam zwischen der Steuereinheit (CU) und dem Speicher (M) angeordnet ist, um die Daten von der Steuereinheit (CU) an den Speicher (M) zu übertragen;
für einen jeden Programmierblock (B) umfasst der Block (B) einen jeweiligen Hauptalgorithmus (MA);
die Vorrichtung so ausgelegt ist, dass für einen jeden Programmierblock (B) die Ausführung des jeweiligen Hauptalgorithmus (MA) in der Steuereinheit (CU) so erfolgt, dass die Steuereinheit (CU) die mit dem Block (B) assoziierte Funktion relativ zu dem mit dem Block (B) assoziierten Steuerelement durchführt;
**dadurch gekennzeichnet, dass**
für einen jeden Programmierblock (B) der Block (B) einen jeweiligen Verfolgungsalgorithmus (TA) umfasst, sodass die Ausführung des Blocks (B) der Ausführung sowohl des Hauptalgorithmus (MA) als auch des Verfolgungsalgorithmus (TA) entspricht;
die Vorrichtung so ausgelegt ist, dass für einen jeden Block (B) die Ausführung des jeweiligen Verfolgungsalgorithmus (TA) in der Steuereinheit (CU) so erfolgt, dass der Speicher (M) automatisch mindestens ein Datum speichert, das die Ausführung des jeweiligen Hauptalgorithmus (MA) angibt;
die Vorrichtung (1) so ausgelegt ist, dass für einen jeden Block (B) die Ausführung des jeweiligen Verfolgungsalgorithmus (TA) in der Steuereinheit (CU) so erfolgt, dass der Speicher (M) automatisch mindestens ein Datum speichert, das die Richtigkeit der Ausführung des jeweiligen Hauptalgorithmus (MA) angibt;
die zweite Benutzerschnittstelle (I2) ausgelegt ist, um als Ausgabe zu einem zweiten Benutzer Informationen bereitzustellen, die die in dem Speicher (M) gespeicherten Daten darstellen.

2. Überwachungsvorrichtung (1) nach Anspruch 1, wobei die Vorrichtung so ausgelegt ist, dass für einen jeden Block (B) die Ausführung des jeweiligen Verfolgungsalgorithmus (TA) in der Steuereinheit (CU) so erfolgt, dass der Speicher (M) automatisch mindestens ein Datum speichert, das den Zeitpunkt der Ausführung des jeweiligen Hauptalgorithmus (MA) angibt.

3. Überwachungsvorrichtung (1) nach Anspruch 1, wobei für einen jeden Block (B) die jeweilige Funktionsgruppe eine Funktion (ON) zur Betätigung des jeweiligen Steuerelements umfasst, sodass für einen jeden Block die Ausführung des jeweiligen Verfolgungsalgorithmus (TA) so erfolgt, dass der Speicher (M) die Betätigung oder die Nichtbetätigung des mit dem Block (B) assoziierten Steuerelements speichert.

4. Überwachungsvorrichtung (1) nach einem der vorhergehenden Ansprüche, umfassend für mindestens eines der Steuerelemente einen Hilfssensor, der mit dem Steuerelement assoziiert ist, wobei die Vorrichtung so ausgelegt ist, dass der Hilfssensor die Betätigung des Steuerelements erfasst.

5. Überwachungsvorrichtung (1) nach einem der vorhergehenden Ansprüche, wobei der Speicher (M) zu dem robotisierten System (RS) gehört.

6. Überwachungsvorrichtung (1) nach einem der vorhergehenden Ansprüche, umfassend:
- eine elektronische Eingabeeinrichtung (ID), die die erste Schnittstelle (I1) und eine Programmiereinheit (PU) umfasst, wobei die Programmiereinheit dazu ausgelegt ist, das Programm (P) zumindest auf der Grundlage der Auswahl zu erstellen;
- eine Eingangsverbindung (IC), die betriebswirksam zwischen der Eingabeeinrichtung (ID) angeordnet ist, um es dem Benutzer zu ermöglichen, das Programm in die Steuereinheit (CU) zu laden, sodass das Programm in der Steuereinheit (CU) ausgeführt werden kann.

7. Überwachungsvorrichtung (1) nach einem der vorhergehenden Ansprüche, umfassend:
- eine elektronische Ausgabeeinrichtung (OD), die wiederum die zweite Schnittstelle (I2) umfasst;
- eine Ausgangsverbindung (OC), die betriebswirksam zwischen dem Speicher und der Ausgabeeinrichtung (OD) angeordnet ist, um die Daten von dem Speicher (M) zu der Ausgabeeinrichtung (OD) zu übertragen, sodass die zweite Schnittstelle (I2) die Informationen bereitstellen kann.

8. Überwachungsvorrichtung (1) nach Anspruch 6 oder 7, umfassend ein Programmiersystem (PS), das wiederum die elektronische Eingabeeinrichtung (ID) und die elektronische Ausgabeeinrichtung (OD) umfasst.

9. Verfahren (1) zur Überwachung der Montage- und Programmieraktivitäten eines robotisierten Systems (RS), umfassend:
- einen Montageschritt, bei dem ein erster Benutzer ein robotisiertes System (RS) montiert, das eine Steuereinheit (CU), eine oder mehrere Strukturkomponenten (C1, C2, C3) und ein oder mehrere Elemente (S1, S2, A2, S2, A3, S3) zum Steuern der Strukturkomponenten umfasst; ein jedes der Steuerelemente kann ein Sensor oder ein Aktor sein, der mit einer jeweiligen Strukturkomponente assoziiert ist;
- einen Programmierschritt, bei dem ein erster Benutzer über eine erste Benutzerschnittstelle (I1) ein Programm (P) durch mindestens eine Auswahl von visuellen Programmierblöcken (B1, B2, B3, B4, B5, B6, B7, B8, B9, B10, B11, B12, B13) erstellt, wobei ein jeder dieser visuellen Programmierblöcke mit einer jeweiligen Funktion und einem jeweiligen der Steuerelemente assoziiert ist, wobei die jeweilige Funktion eine aus einer jeweiligen Funktionsgruppe sein kann;
- einen Ausführungsschritt, bei dem das erstellte Programm (P) in einer Steuereinheit (CU) ausgeführt wird;
für einen jeden Block (B) umfasst der Block (B) einen jeweiligen Hauptalgorithmus (MA) und einen jeweiligen Verfolgungsalgorithmus (TA), sodass die Ausführung des Blocks (B) der Ausführung sowohl des Hauptalgorithmus (MA) als auch des Verfolgungsalgorithmus (TA) entspricht;
für einen jeden durchgeführten Block (B) des Programms (P) die Ausführung des jeweiligen Hauptalgorithmus (MA) in der Steuereinheit (CU) so erfolgt, dass die Steuereinheit (CU) die mit dem Block (B) assoziierte Funktion relativ zu dem mit dem Block (B) assoziierten Steuerelement durchführt;
**dadurch gekennzeichnet, dass**
für einen jeden Block (B) der Block (B) einen jeweiligen Verfolgungsalgorithmus (TA) umfasst, sodass die Ausführung des Blocks (B) der Ausführung sowohl des Hauptalgorithmus (MA) als auch des Verfolgungsalgorithmus (TA) entspricht; für einen jeden Block (B) des durchgeführten Programms (P) bewirkt die Ausführung des jeweiligen Verfolgungsalgorithmus (TA) in der Steuereinheit (CU) die automatische Speicherung mindestens eines Datums, das die Ausführung des jeweiligen Hauptalgorithmus (MA) angibt;
für einen jeden durchgeführten Block (B) des Programms (P) bewirkt die Ausführung des jeweiligen Verfolgungsalgorithmus (TA) in der Steuereinheit (CU) die automatische Speicherung mindestens eines Datums, das die Richtigkeit oder Unrichtigkeit der Ausführung des jeweiligen Hauptalgorithmus (MA) angibt;
das Verfahren einen Schritt zum Zuführen von Informationen, die sich auf die gespeicherten Daten beziehen, an einem zweiten Benutzer über eine zweite Benutzerschnittstelle umfasst.

10. Verfahren nach Anspruch 9, wobei für einen jeden durchgeführten Block (B) des Programms (P) die Ausführung des jeweiligen Verfolgungsalgorithmus (TA) in der Steuereinheit (CU) die automatische Speicherung zumindest eines den Zeitpunkt der Ausführung des jeweiligen Hauptalgorithmus (MA) angebenden Datums bewirkt.

11. Überwachungsverfahren nach Anspruch 9 oder 10, wobei das Verfahren durch eine Vorrichtung nach einem der Ansprüche 1 bis 8 durchgeführt wird.

12. Verfahren zur Bewertung des Lernens eines Schülers während einer Unterrichtsstunde mittels eines Verfahrens nach einem der Ansprüche 9 bis 11, umfassend mindestens zweimaliges Wiederholen einer Betriebssequenz, die Folgendes umfasst:
- Durchführen des Unterrichts, bei dem der zweite Benutzer dem ersten Benutzer Anweisungen zum Durchführen des Montageschritts und des Programmierschritts erteilt;
- Durchführen eines Verfahrens nach einem der Ansprüche 9 bis 11;
- einen Bewertungsschritt, bei dem der zweite Benutzer die gelieferten Informationen bewertet und/oder steuert und gegebenenfalls mit Informationen vergleicht, die während zuvor durchgeführter Betriebsabläufe geliefert wurden.

## Revendications

1. Appareil (1) de surveillance des activités d'assemblage et de programmation d'un système robotisé (RS), comprenant :
- un système robotisé (RS) qui comprend une unité de contrôle (CU), un ou plusieurs composants structurels (C1, C2, C3), et un ou plusieurs éléments (S1, S2, A2, S2, A3, S3) pour contrôler les composants structurels ; chacun des éléments de contrôle peut être un capteur ou un actionneur associé à un composant structurel respectif ;
- une première interface utilisateur (I1) configurée pour permettre à un premier utilisateur de créer un programme informatique (P) par au moins une sélection de blocs de programmation visuels (B1, B2, B3, B4, B5, B6, B7, B8, B9, B10, B11, B12, B13), chacun de ces blocs de programmation visuels étant associé à une fonction respective et à un élément respectif des éléments de contrôle, la fonction respective pouvant être l'une parmi un groupe respectif de fonctions ;
- une mémoire (M) ;
- une seconde interface utilisateur (I2) ;
- une connexion de suivi (TC), interposée fonctionnellement entre l'unité de contrôle (CU) et la mémoire (M) pour transférer les données de l'unité de contrôle (CU) à la mémoire (M) ;
pour chaque bloc de programmation (B), le bloc (B) comprend un algorithme principal (MA) respectif ;
l'appareil est configuré de sorte que, pour chaque bloc de programmation (B), l'exécution de l'algorithme principal (MA) respectif dans l'unité de contrôle (CU) soit telle que l'unité de contrôle (CU) exécute la fonction associée au bloc (B) par rapport à l'élément de contrôle associé au bloc (B) ;
**caractérisé en ce que**,
pour chaque bloc de programmation (B), le bloc (B) comprend un algorithme de suivi (TA) respectif, de telle sorte que l'exécution du bloc (B) correspond à l'exécution de l'algorithme principal (MA) et de l'algorithme de suivi (TA) ;
l'appareil est configuré de sorte que, pour chaque bloc (B), l'exécution de l'algorithme de suivi (TA) respectif dans l'unité de contrôle (CU) soit telle que la mémoire (M) stocke automatiquement au moins un élément de données indiquant l'exécution de l'algorithme principal (MA) respectif ;
l'appareil (1) est configuré de sorte que, pour chaque bloc (B), l'exécution de l'algorithme de suivi (TA) respectif dans l'unité de contrôle (CU) soit telle que la mémoire (M) stocke automatiquement au moins un élément de données indiquant l'exactitude de l'exécution de l'algorithme principal (MA) respectif ;
la seconde interface utilisateur (I2) configurée pour fournir en sortie à un second utilisateur des informations représentant les données stockées dans la mémoire (M).

2. Appareil (1) de surveillance selon la revendication 1, dans lequel l'appareil est configuré de sorte que, pour chaque bloc (B), l'exécution de l'algorithme de suivi (TA) respectif dans l'unité de contrôle (CU) soit telle que la mémoire (M) stocke automatiquement au moins un élément de données indiquant le temps d'exécution de l'algorithme principal (MA) respectif.

3. Appareil (1) de surveillance selon la revendication 1, dans lequel, pour chaque bloc (B), le groupe respectif de fonctions comprend une fonction (ON) pour l'actionnement de l'élément de contrôle respectif, de telle sorte que, pour chaque bloc, l'exécution de l'algorithme de suivi (TA) respectif est telle que la mémoire (M) stocke l'actionnement ou l'absence d'actionnement de l'élément de contrôle associé au bloc (B).

4. Appareil (1) de surveillance selon l'une quelconque des revendications précédentes, comprenant, pour au moins un des éléments de contrôle, un capteur auxiliaire associé à l'élément de contrôle, l'appareil étant configuré de sorte que le capteur auxiliaire détecte l'actionnement de l'élément de contrôle.

5. Appareil (1) de surveillance selon l'une quelconque des revendications précédentes, dans lequel la mémoire (M) appartient au système robotisé (RS).

6. Appareil (1) de surveillance selon l'une quelconque des revendications précédentes, comprenant :
- un dispositif d'entrée électronique (ID) qui comprend la première interface (I1) et une unité de programmation (PU), l'unité de programmation étant configurée pour créer le programme (P) sur la base au moins de la sélection ;
- une connexion d'entrée (IC) fonctionnellement interposée entre le dispositif d'entrée (ID), pour permettre à l'utilisateur de charger le programme dans l'unité de contrôle (CU), de manière à ce que le programme puisse être exécuté dans l'unité de contrôle (CU).

7. Appareil (1) de surveillance selon l'une quelconque des revendications précédentes, comprenant :
- un dispositif électronique de sortie (OD) qui comprend à son tour la seconde interface (I2) ;
- une connexion de sortie (OC) fonctionnellement interposée entre la mémoire et le dispositif de sortie (OD), pour transférer les données de la mémoire (M) au dispositif de sortie (OD), de manière à ce que la seconde interface (I2) puisse fournir les informations.

8. Appareil (1) de surveillance selon la revendication 6 ou 7, comprenant un système de programmation (PS) qui comprend à son tour le dispositif électronique d'entrée (ID) et le dispositif électronique de sortie (OD).

9. Procédé (1) de surveillance des activités d'assemblage et de programmation d'un système robotisé (RS), comprenant :
- une étape d'assemblage, pendant laquelle un premier utilisateur monte un système robotisé (RS) qui comprend une unité de contrôle (CU), un ou plusieurs composants structurels (C1, C2, C3), et un ou plusieurs éléments (S1, S2, A2, S2, A3, S3) pour contrôler les composants structurels ; chacun des éléments de contrôle peut être un capteur ou un actionneur associé à un composant structurel respectif ;
- une étape de programmation pendant laquelle un premier utilisateur crée, via une première interface utilisateur (I1), un programme (P) par au moins une sélection de blocs de programmation visuels (B1, B2, B3, B4, B5, B6, B7, B8, B9, B10, B11, B12, B13), chacun de ces blocs de programmation visuels étant associé à une fonction respective et à un élément respectif des éléments de contrôle, la fonction respective pouvant être l'une parmi un groupe respectif de fonctions ;
- une étape d'exécution pendant laquelle le programme créé (P) est exécuté dans une unité de contrôle (CU) ; pour chaque bloc (B), le bloc (B) comprend un algorithme principal (MA) respectif et un algorithme de suivi (TA) respectif, de telle sorte que l'exécution du bloc (B) correspond à l'exécution de l'algorithme principal (MA) et de l'algorithme de suivi (TA) ;
pour chaque bloc (B) du programme (P) exécuté, l'exécution de l'algorithme principal (MA) respectif dans l'unité de contrôle (CU) est telle que l'unité de contrôle (CU) exécute la fonction associée au bloc (B) par rapport à l'élément de contrôle associé au bloc (B) ; **caractérisé en ce que**,
pour chaque bloc (B), le bloc (B) comprend un algorithme de suivi (TA) respectif, de telle sorte que l'exécution du bloc (B) correspond à l'exécution de l'algorithme principal (MA) et de l'algorithme de suivi (TA) ; pour chaque bloc (B) du programme (P) exécuté, l'exécution de l'algorithme de suivi (TA) respectif dans l'unité de contrôle (CU) entraîne le stockage automatique d'au moins un élément de données indiquant l'exécution de l'algorithme principal (MA) respectif ;
pour chaque bloc (B) du programme (P) exécuté,
l'exécution de l'algorithme de suivi (TA) respectif dans l'unité de contrôle (CU) entraîne le stockage automatique d'au moins un élément de données indiquant l'exactitude ou l'inexactitude de l'exécution de l'algorithme principal (MA) respectif ;
le procédé comprend une étape consistant à fournir à un second utilisateur, via une seconde interface utilisateur, des informations relatives aux données stockées.

10. Procédé selon la revendication 9, dans lequel, pour chaque bloc (B) du programme (P) exécuté, l'exécution de l'algorithme de suivi (TA) respectif dans l'unité de contrôle (CU) entraîne le stockage automatique d'au moins un élément de données indiquant le temps d'exécution de l'algorithme principal (MA) respectif.

11. Procédé de surveillance selon la revendication 9 ou 10, dans lequel le procédé est exécuté par un appareil selon l'une quelconque des revendications 1 à 8.

12. Procédé d'évaluation de l'apprentissage d'un élève au cours d'une leçon éducative au moyen d'un procédé selon l'une quelconque des revendications 9 à 11, comprenant la répétition au moins deux fois d'une séquence opératoire qui comprend :
- réaliser la leçon, pendant laquelle le second utilisateur transmet au premier utilisateur des enseignements sur la manière de réaliser l'étape d'assemblage et l'étape de programmation ;
- exécuter un procédé selon l'une quelconque des revendications 9 à 11 ;
- une étape d'évaluation, pendant laquelle le second utilisateur évalue et/ou contrôle les informations fournies, le cas échéant en les comparant avec les informations fournies pendant des séquences opératoires effectuées précédemment.
